# EUROPÄISCHE PATENTSCHRIFT

(11) **EP 3 636 409 B1**
(45) Veröffentlichungstag und Bekanntmachung des Hinweises auf die Patenterteilung: **13.07.2022**
(21) Anmeldenummer: 19199877.2
(22) Anmeldetag: 26.09.2019
(51) Int. Cl.: B29C 45/14, E03D 9/08

(54) **FUNKTIONSEINHEIT FÜR EINEN DUSCH-WC-SITZ**
FUNCTIONAL UNIT FOR A SHOWER TOILET SEAT
UNITÉ FONCTIONNELLE POUR UN ABATTANT DOUCHE POUR CUVETTE DE WC

(30) Priorität: 12.10.2018 DE 102018125353
(43) Veröffentlichungstag der Anmeldung: 15.04.2020
(73) Patentinhaber: Grohe AG, 58653 Hemer (DE)
(72) Erfinder: Tchana Tchuinou, Bertrand, 42289 Wuppertal (DE); Limberg, Dirk, 44894 Bochum (DE)

(56) Entgegenhaltungen:
- DE-U1-202006 013 209
- JP-A- H0 967 847
- STRASSER F: "MOLDING METAL INSERTS INTO PLASTIC PARTS", PLASTICS ENGINEERING, SOCIETY OF PLASTICS ENGINEERS,INC. GREENWICH, CONN, US, Bd. 36, Nr. 10, 1. Oktober 1980 (1980-10-01), Seiten 17-22, XP002034382, ISSN: 0091-9578

## Beschreibung

Die vorliegende Erfindung betrifft eine Funktionseinheit für einen Dusch-WC-Sitz gemäß Anspruch 1.

Bekannt sind manuell oder elektrisch betätigbare Sitze für Dusch-WCs, Bidets, etc., die über ihr Gehäuse Kräfte eines Toilettensitzes aufnehmen. Hierzu sind an den Gehäusen Dome angebracht, an denen die Toilettensitze verschwenkbar befestigbar sind. Um bei der Benutzung Beschädigungen an den Gehäusen infolge der über die Toilettensitze aufgebrachten Kräfte zu vermeiden, müssen die Gehäuse sehr stabil und damit klobig ausgeführt werden. Zudem ist der Montageaufwand für die Dome, insbesondere wenn diese verschraubt werden, sehr hoch, was zu zusätzlichen Kosten führt. Die Druckschriften DE202006013209U1 und JPH0967847 beschreiben bekannte Dusch-WCs. Der Artikel Strasser F: "MOLDING METAL INSERTS INTO PLASTIC PARTS", PLASTICS ENGINEERING, SOCIETY OF PLASTICS ENGINEERS,INC. GREENWICH; CONN,US, Bd. 36, Nr. 10, 1. Oktober 1980, Seiten 17-22 beschreibt ferner Plastik-Gussverfahren mit Metalleinsätzen.

Aufgabe der Erfindung ist es daher, die mit Bezug auf den Stand der Technik geschilderten Probleme zumindest teilweise zu lösen und insbesondere eine Funktionseinheit für einen Dusch-WC-Sitz anzugeben, die mit einer geringen Bauhöhe und mit geringen Montagekosten herstellbar ist. Zudem wird hierin auch ein Verfahren zur Herstellung einer Grundplatte für eine Funktionseinheit eines Dusch-WC-Sitzes beschrieben, durch die die Funktionseinheit mit einer geringen Bauhöhe und mit geringen Montagekosten herstellbar ist.

Diese Aufgaben werden gelöst mit einer Funktionseinheit gemäß den Merkmalen der Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Funktionseinheit für einen Dusch-WC-Sitz gemäß Anspruch 1 bei, die zumindest die folgenden Komponenten aufweist:
- eine Grundplatte aus Kunststoff zur Befestigung an einer WC-Keramik;
- eine Abdeckung zum zumindest teilweisen Abdecken der Grundplatte auf der WC-Keramik; und
- zumindest ein Befestigungselement für den Dusch-WC-Sitz, wobei das zumindest eine Befestigungselement zumindest teilweise in die Grundplatte eingegossen ist.

Die Funktionseinheit ist insbesondere für ein so genanntes Dusch-WC oder WC-Bidet vorgesehen, dass sowohl eine WC- als auch eine Bidet-Funktion aufweist. Ein solches WC-Bidet umfasst regelmäßig eine Keramik mit einem Becken zur Aufnahme von Körperausscheidungen. Das Becken kann mit einer Spüleinrichtung verbindbar sein, mittels der die Körperausscheidungen über einen Abfluss aus dem Becken entfernbar sind. Die Keramik kann auf ihrer Oberseite eine Montagefläche für die Funktionseinheit aufweisen, an der die Funktionseinheit befestigbar ist. Die Funktionseinheit umfasst insbesondere eine oder mehrere Funktionskomponenten für das Dusch-WC bzw. das WC-Bidet, wie zum Beispiel einen Flüssigkeitszulauf, zumindest ein Flüssigkeitsventil, einen Hebel zur Steuerung des zumindest einen Flüssigkeitsventils, zumindest eine Flüssigkeitsdüse zur Reinigung eines Benutzers und/oder ein Betätigungselement zum Verstellen einer Position der Funktionseinheit an der Keramik. Weiterhin handelt es sich bei Funktionseinheit um eine Komponente, über die der Dusch-WC-Sitz an der Keramik, insbesondere verschwenkbar, befestigbar ist. Der Dusch-WC-Sitz kann insbesondere nach Art einer Toilettenbrille ausgebildet sein und/oder das Becken der WC-Keramik an einer Oberseite der WC-Keramik zumindest teilweise umgeben. Zudem kann der Benutzer bei dessen Benutzung insbesondere auf dem Dusch-WC-Sitz sitzen. Zur Befestigung des Dusch-WC-Sitzes umfasst die Funktionseinheit zumindest ein Befestigungselement für den Dusch-WC-Sitz. Das zumindest eine Befestigungselement ist insbesondere nach Art eines Doms ausgebildet. Weiterhin kann das zumindest eine Befestigungselement stiftförmig oder stabfürmig ausgebildet sein, eine Länge von 10 mm (Millimeter) bis 80 mm und/oder einen Durchmesser von 3 mm bis 15 mm aufweisen. Der Dusch-WC-Sitz ist auf das zumindest eine Befestigungselement insbesondere aufsteckbar.

Das zumindest eine Befestigungselement ist (direkt) an einer Grundplatte der Funktionseinheit befestigt und zumindest teilweise in die Grundplatte eingegossen. An der Grundplatte sind zudem insbesondere die Funktionskomponenten befestigbar. Bei der Grundplatte handelt es sich insbesondere um eine Bodenplatte der Funktionseinheit. Die Grundplatte ist daher insbesondere plattenförmig und/oder flächenförmig ausgebildet. Weiterhin ist die Grundplatte insbesondere durch ein Kunststoffspritzgussverfahren hergestellt und besteht somit zumindest teilweise aus Kunststoff. Bei dem Kunststoffspritzgussverfahren wird der Kunststoff durch eine Spritzgießmaschine plastifiziert bzw. verflüssigt und in ein Formwerkzeug gespritzt. Das Formwerkzeug weist einen Hohlraum auf, der die Form der Grundplatte vorgibt und in die das zumindest eine Befestigungselement eingelegt wird. Beim Einspritzen des Kunststoffs in den Hohlraum des Formwerkzeugs wird das zumindest eine Befestigungselement durch den Kunststoff zumindest teilweise umströmt und somit in die Grundplatte eingegossen. Nach dem Einspritzen des Kunststoffs in das Formwerkzeug wird das Formwerkzeug abgekühlt und der plastifizierte Kunststoff verfestigt. Das Formwerkzeug wird geöffnet, sodass das die Grundplatte mit dem zumindest einen Befestigungselement aus dem Formwerkzeug entnommen werden kann. Die Funktionseinheit weist zudem eine Abdeckung, beispielsweise nach Art einer Haube, auf, mit der die Grundplatte auf der Keramik zumindest teilweise oder vollständig abdeckbar ist.

Durch das Befestigen des zumindest einen Befestigungselements an der Grundplatte können die von dem Dusch-WC-Sitz über das zumindest eine Befestigungselement eingeleiteten Kräfte, insbesondere unter Umgehung der Abdeckung, direkt auf die Keramik abgeleitet werden.

Hierzu kann die Grundplatte insbesondere direkt auf der WC-Keramik (flach) aufliegen. Hierdurch können besonders hohe Kräfte ohne Beschädigung der Funktionseinheit aufgenommen werden und die übrigen Komponenten der Funktionseinheit, insbesondere die Abdeckung, leichter und flacher ausgebildet werden. Gleichzeitig wird die Anzahl der zu montierenden Komponenten der Funktionseinheit reduziert, wodurch sich die Montagekosten besonders stark reduzieren.

Das Befestigungselement kann zumindest teilweise aus Metall bestehen. Bei dem Metall handelt es sich insbesondere um Edelstahl.

Das zumindest eine Befestigungselement kann sich durch die Abdeckung erstrecken. Insbesondere erstreckt sich das zumindest eine Befestigungselement durch die Abdeckung hindurch, sodass der Dusch-WC-Sitz außerhalb der Funktionseinheit an dem zumindest einem Befestigungselement befestigbar ist.

Die Grundplatte weist zumindest eine Funktionskomponente der Funktionseinheit auf.

Die Grundplatte weist zumindest eine Flüssigkeitsdüse auf. Die Flüssigkeitsdüse dient wie bereits erwähnt der Reinigung eines Benutzers des Dusch-WCs bzw. WC-Bidets. Insbesondere kann die Grundplatte zwei Flüssigkeitsdüsen zur Erzeugung von Flüssigkeitsstrahlen mit zwei verschiedenen Strahlarten aufweisen.

Die Grundplatte kann zumindest ein Flüssigkeitsventil zur Steuerung der zumindest einen Flüssigkeitsdüse aufweisen. Insbesondere ist mittels des zumindest einen Flüssigkeitsventils die zumindest eine Flüssigkeitsdüse aktivierbar und/oder deaktivierbar.

Die Grundplatte kann einen Hebel zur Steuerung des Flüssigkeitsventils aufweisen. Der Hebel ist durch den Benutzer außerhalb der Funktionseinheit betätigbar. Der Hebel kann zur Steuerung des Flüssigkeitsventils durch den Benutzer insbesondere drehbar und/oder drückbar sein.

Die Grundplatte kann ein Betätigungselement zum Verstellen einer Position der Funktionseinheit aufweisen. Das Betätigungselement kann insbesondere nach Art eines Druckknopfs ausgebildet sein. Durch Betätigung des Betätigungselements ist die Position der Grundplatte gegenüber der Keramik verstellbar und/oder die Funktionseinheit von der Keramik zu Reinigungszwecken lösbar. Insbesondere ist mittels des Betätigungselements eine Rastposition an einer Halteplatte für die Funktionseinheit änderbar.

Die Grundplatte kann zumindest eine Verstärkungsstruktur aufweisen. Die Verstärkungsstruktur ist insbesondere an einer Oberfläche der Grundplatte ausgebildet und/oder dient der Erhöhung einer Steifigkeit der Grundplatte. Die zumindest eine Verstärkungsstruktur kann Streben umfassen, die sich senkrecht aus der Oberfläche der Grundplatte erheben. Weiterhin kann die zumindest eine Verstärkungsstruktur nach Art einer Wabenstruktur ausgebildet sein. Weiterhin können sich die Streben der zumindest einen Verstärkungsstruktur im Bereich des zumindest einen Befestigungselements in eine radiale Richtung des zumindest einen Befestigungselements bzw. sternförmig von dem zumindest einen Befestigungselement erstrecken. Zudem kann eine Höhe der zumindest einen Verstärkungsstruktur (insbesondere ausgehend von der Oberfläche der Grundplatte) sich in Richtung des zumindest einen Befestigungselements erhöhen.

Es wird auch ein Verfahren zur Herstellung einer Grundplatte für eine Funktionseinheit eines Dusch-WC-Sitzes angegeben, dass zumindest die folgenden Schritte aufweist:
a) Bereitstellen eines Formwerkzeugs einer Spritzgießmaschine zur Herstellung einer Grundplatte der Funktionseinheit;
b) Einlegen zumindest eines Befestigungselements in das Formwerkzeug;
c) Einspritzen eines geschmolzenen Kunststoffs in das Formwerkzeug, sodass das zumindest eine Befestigungselement zumindest teilweise mit dem Kunststoff umgossen ist;
d) Verfestigen des geschmolzenen Kunststoffs;
e) Öffnen des Formwerkzeugs (15); und
f) Entnehmen der Grundplatte (3).

Das vorgeschlagene Verfahren dient insbesondere zur Herstellung einer Grundplatte für die erfindungsgemäße Funktionseinheit für einen Dusch-WC-Sitz. Für weitere Einzelheiten wird daher auf die Beschreibung der Funktionseinheit verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Bidetkeramik in einer perspektivischen Darstellung;
- Fig. 2:: eine Grundplatte in einer ersten perspektivischen Darstellung;
- Fig. 3:: die Grundplatte in einer zweiten perspektivischen Darstellung;
- Fig. 4:: die Grundplatte mit Funktionskomponenten in einer dritten perspektivischen Darstellung;
- Fig. 5:: eine Funktionseinheit in einer perspektivischen Darstellung;
- Fig. 6:: die Montageschritte der Funktionseinheit an die Keramik; und
- Fig. 7:: eine Spritzgießmaschine in einer schematischen Darstellung.

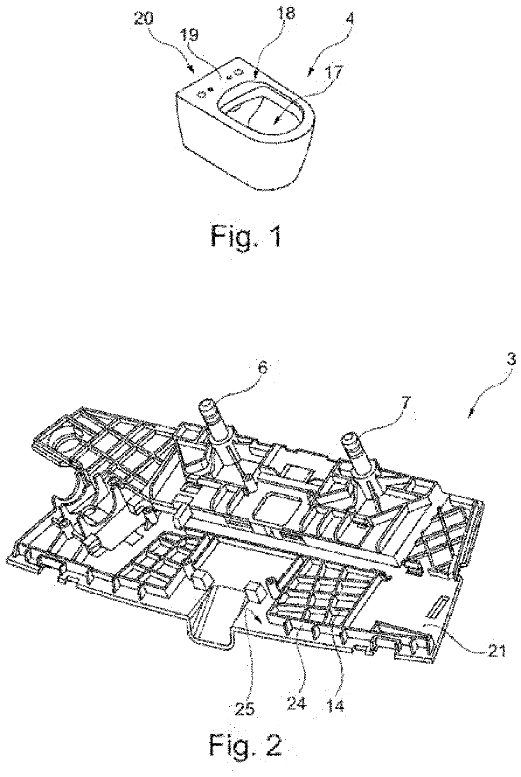

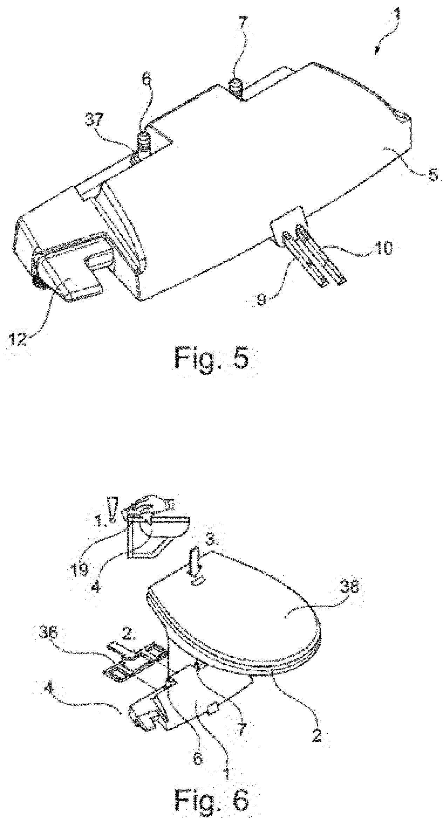

Die Fig. 1 zeigt eine WC-Keramik 4 in einer perspektivischen Darstellung. Die Keramik 4 weist ein Becken 17 zur Aufnahme von Körperausscheidungen auf. Das Becken 17 ist mit einer hier nicht gezeigten Spüleinrichtung verbindbar, mittels der die Körperausscheidungen über einen hier ebenfalls nicht gezeigten Abfluss aus dem Becken 17 entfernbar sind. Die WC-Keramik 4 weist auf ihrer Oberseite 18 eine Montagefläche 19 für eine in der Fig. 6 gezeigte Funktionseinheit 1 eines Dusch-WC-Sitzes 2 auf. Die Montagefläche 19 ist an einem rückseitigen Ende 20 der Keramik 4 ausgebildet, an dem die Keramik 4 an einer hier nicht gezeigten Wand befestigbar ist.

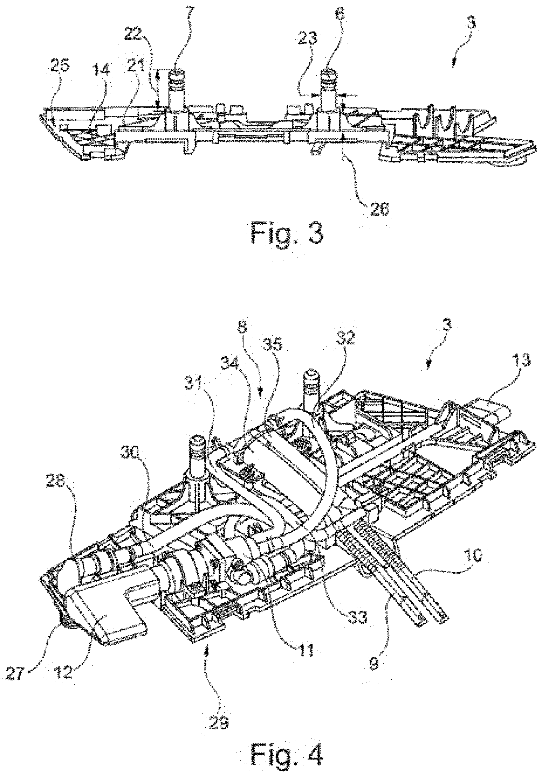

Die Fig. 2 und 3 zeigen eine Grundplatte 3 in einer ersten und zweiten perspektivischen Darstellung. Die Grundplatte 3 besteht aus Kunststoff und ist flächenförmig ausgebildet. Weiterhin umfasst die Grundplatte 3 ein erstes Befestigungselement 6 und ein zweites Befestigungselement 7. Das erste Befestigungselement 6 und das zweite Befestigungselement 7 sind nach Art von bzw. als Dome gebildet, bestehen zumindest teilweise aus Edelstahl und sind jeweils an einem ihrer längsseitigen Enden in die Grundplatte 3 eingegossen. Die gegenüberliegenden längsseitigen Enden des ersten Befestigungselements 6 und des zweiten Befestigungselements 7 ragen, beispielsweise mit einer Länge 22 (vgl. Fig. 3) von 10 mm (Millimeter) bis 50 mm, aus der Grundplatte 3 hervor. Das erste Befestigungselement 6 und das zweite Befestigungselement 7 können beispielsweise einen Durchmesser 23 (vgl. Fig. 3) von 3 mm (Millimeter) bis 15 mm aufweisen. Insbesondere ragen das erste Befestigungselement 6 und das zweite Befestigungselement 7 senkrecht aus der Grundplatte 3, insbesondere senkrecht zu einer Grundfläche 21 der Grundplatte 3, hervor. Weiterhin erstrecken sich das erste Befestigungselement 6 und das zweite Befestigungselement 7 parallel zueinander. Die Grundplatte weist an ihrer Oberfläche 25 zudem Verstärkungsstrukturen 14 auf, die die Steifigkeit der Grundplatte 3 erhöhen. Die Verstärkungsstrukturen 14 umfassen Streben 24, die sich senkrecht aus der Oberfläche 25 der Grundplatte 3 erheben und eine Wabenstruktur ausbilden können. Weiterhin erstrecken sich die Streben 24 der Verstärkungsstrukturen 14 im Bereich des ersten Befestigungselements 6 und des zweiten Befestigungselements 7 in eine radiale Richtung bzw. sternförmig von dem ersten Befestigungselements 6 und dem zweiten Befestigungselement 7. Zudem steigt eine Höhe 26 (vgl. Fig. 3) der Verstärkungsstrukturen 14 (insbesondere ausgehend von der Oberfläche 25 der Grundplatte 3) in Richtung des ersten Befestigungselements 6 und des zweiten Befestigungselements 7 an.

Die Fig. 4 zeigt die Grundplatte 3 in einer dritten perspektivischen Darstellung nach der Anbringung von Funktionskomponenten 8. Bei den Funktionskomponenten 8 handelt es sich um einen Flüssigkeitszulauf 27, ein Flüssigkeitsventil 11, eine erste Flüssigkeitsdüse 9, eine zweite Flüssigkeitsdüse 10, einen Hebel 12 und ein Betätigungselement 13. An den Flüssigkeitszulauf 27 ist von einer Unterseite 29 der Grundplatte 3 aus eine hier nicht gezeigte Flüssigkeitszuführleitung anschließbar, über die der in der Fig. 5 und 6 gezeigten Funktionseinheit 1 eine Flüssigkeit, insbesondere Wasser, zuführbar ist. Die Flüssigkeit wird durch ein an der Grundplatte 3 befestigtes Umlenkelement 28 um 90° umgelenkt und über eine erste Schlauchleitung 30 dem Flüssigkeitsventil 11 zugeführt. Das Flüssigkeitsventil 11 ist über den Hebel 12 betätigbar. Insbesondere ist über den Hebel 12 bzw. das Flüssigkeitsventil 11 die Zuführung der Flüssigkeit über eine zweite Schlauchleitung 31 zu der ersten Flüssigkeitsdüse 9 oder die Zuführung der Flüssigkeit über eine dritte Schlauchleitung 32 zu der zweiten Flüssigkeitsdüse 10 aktivierbar bzw. deaktivierbar. Durch die Flüssigkeitsdüse 9, 10 ist ein Flüssigkeitsstrahl in Richtung eines Benutzers eines Dusch-WCs bzw. Bidets richtbar. Mittels der ersten Flüssigkeitsdüse 9 und der zweiten Flüssigkeitsdüse 10 sind zwei Flüssigkeitsstrahlen mit verschiedenen Strahlarten versprühbar. Weiterhin führt von dem Flüssigkeitsventil 11 eine vierte Schlauchleitung 33 zu beiden Flüssigkeitsdüsen 9, 10 über die den Flüssigkeitsdüsen 9, 10 zu Reinigungszwecken der Flüssigkeitsdüse 9, 10 zuführbar ist. Die erste Flüssigkeitsdüse 9 ist in einen ersten Düsenzylinder 34 und die zweite Flüssigkeitsdüse 10 in einen zweiten Düsenzylinder 35 hinein- und herausfahrbar. Das Heraus- und Hereinfahren der ersten Flüssigkeitsdüse 9 und der zweiten Flüssigkeitsdüse 10 erfolgt automatisch durch den anliegenden Flüssigkeitsdruck. Das Betätigungselement 13 ist hier nach Art eines bzw. als Druckknopf ausgebildet. Durch Betätigung des Betätigungselements 13 ist die Position der Grundplatte 3 gegenüber der in der Fig. 1 gezeigten Bidetkeramik 4 verstellbar und/oder von der Bidetkeramik 4 zu Reinigungszwecken lösbar. Insbesondere ist mittels des Betätigungselements 13 eine Rastposition an einer in der Fig. 6 gezeigten Halteplatte 36 änderbar.

Die Fig. 5 zeigt eine Funktionseinheit 1 in einer perspektivischen Darstellung. Die Funktionseinheit 1 umfasst die in der Fig. 4 gezeigte Grundplatte 3 mit den Funktionskomponenten 8, wobei die Grundplatte 3 hier durch eine Abdeckung 5 nach Art einer Haube abgedeckt ist. Durch die Abdeckung 5 ragen das erste Befestigungselement 6, das zweite Befestigungselement 7, die erste Flüssigkeitsdüse 9, die zweite Flüssigkeitsdüse 10, der Hebel 12 und das (in der Fig. 4 sichtbare) Betätigungselement 13. Die Durchführungen der Abdeckung 5 für das erste Befestigungselement 6 und das zweite Befestigungselement 7 sind jeweils mit einer (ringförmigen oder hülsenförmigen) Dichtung 37, die hier nach Art eines Silikonstopfens ausgebildet sind, abgedichtet, sodass keine Flüssigkeit in die Funktionseinheit 1 eindringen kann.

Die Fig. 6 zeigt die Montageschritte des Bidetsitzes 2 an der WC-Keramik 4. Zunächst wird die Montagefläche 19 der WC-Keramik 4 gereinigt und anschließend eine Halteplatte 36 im Bereich der Montagefläche 19 an der Bidetkeramik 4 beispielsweise über eine Schraubverbindung befestigt. Nach dem Befestigen der Halteplatte 36 ist die Funktionseinheit 1 auf die Halteplatte 36 aufschiebbar, sodass die (hier nicht sichtbare) Grundplatte 3 der Funktionseinheit 1 mit der Halteplatte 36 verrastet. Anschließend kann der Bidetsitz 2 mit einem Deckel 38 an dem ersten Befestigungselement 6 und dem zweiten Befestigungselement 7 der Funktionseinheit 1 befestigt werden. Der Dusch-WC-Sitz 2 und der Deckel 38 sind gegenüber der Funktionseinheit 1 zum Öffnen und Schließen der Keramik 4 verschwenkbar.

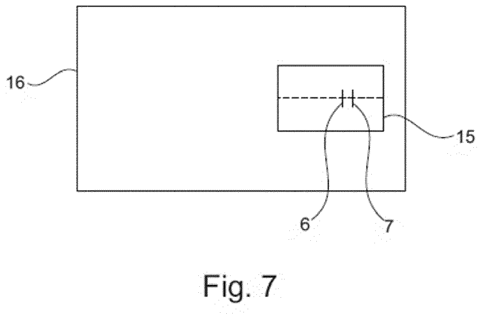

Die Fig. 7 zeigt schematisch eine Spritzgießmaschine 16 zur Herstellung der in der Fig. 2 gezeigten Grundplatte 3. Die Spritzgießmaschine 16 umfasst ein Formwerkzeug 15, das hier zweiteilig ausgebildet ist. Zur Herstellung der Grundplatte 3 wird das Formwerkzeug 15 geöffnet und das erste Befestigungselement 6 sowie das zweite Befestigungselement 7 in das Umformwerkzeug 15 eingelegt. Anschließend wird das Formwerkzeug 15 geschlossen und durch die Spritzgießmaschine 16 ein geschmolzener Kunststoff in das Formwerkzeug 15 eingespritzt, sodass die Befestigungselemente 6, 7 teilweise mit dem Kunststoff umgossen sind. Der geschmolzene Kunststoff wird durch Abkühlen verfestigt, das Formwerkzeug wieder geöffnet und die Grundplatte 3 aus dem Formwerkzeug 15 entnommen.

Durch die vorliegende Erfindung ist eine Funktionseinheit gemäß Anspruch 1 mit einer geringen Bauhöhe und mit geringen Montagekosten herstellbar.

### Bezugszeichenliste

- 1: Funktionseinheit
- 2: Dusch-WC-Sitz
- 3: Grundplatte
- 4: WC-Keramik
- 5: Abdeckung
- 6: erstes Befestigungselement
- 7: zweites Befestigungselement
- 8: Funktionskomponente
- 9: erste Flüssigkeitsdüse
- 10: zweite Flüssigkeitsdüse
- 11: Flüssigkeitsventil
- 12: Hebel
- 13: Betätigungselement
- 14: Verstärkungsstruktur
- 15: Formwerkzeug
- 16: Spritzgießmaschine
- 17: Becken
- 18: Oberseite
- 19: Montagefläche
- 20: Ende
- 21: Grundfläche
- 22: Länge
- 23: Durchmesser
- 24: Strebe
- 25: Oberfläche
- 26: Höhe
- 27: Flüssigkeitszulauf
- 28: Umlenkelement
- 29: Unterseite
- 30: erste Schlauchleitung
- 31: zweite Schlauchleitung
- 32: dritte Schlauchleitung
- 33: vierte Schlauchleitung
- 34: erster Düsenzylinder
- 35: zweiter Düsenzylinder
- 36: Halteplatte
- 37: Dichtung
- 38: Deckel

## Patentansprüche

1. Funktionseinheit (1) für einen Dusch-WC-Sitz (2), zumindest aufweisend:
- eine Grundplatte (3) aus Kunststoff zur Befestigung an einer WC-Keramik (4);
- eine Abdeckung (5) zum zumindest teilweisen Abdecken der Grundplatte (3) auf der WC-Keramik (4); und
- zumindest ein Befestigungselement (6, 7) für den Dusch-WC-Sitz (2), wobei das zumindest eine Befestigungselement (6, 7) zumindest teilweise in die Grundplatte (3) eingegossen ist.

2. Funktionseinheit (1) nach Patentanspruch 1, wobei das Befestigungselement (6, 7) zumindest teilweise aus Metall besteht.

3. Funktionseinheit (1) nach einem der vorhergehenden Patentansprüche, wobei sich das zumindest eine Befestigungselement (6, 7) durch die Abdeckung (5) erstreckt.

4. Funktionseinheit (1) nach einem der vorhergehenden Patentansprüche, wobei die Grundplatte (3) zumindest eine Funktionskomponente (8) der Funktionseinheit (1) aufweist.

5. Funktionseinheit (1) nach einem der vorhergehenden Patentansprüche, wobei die Grundplatte (3) zumindest eine Flüssigkeitsdüse (9, 10) aufweist.

6. Funktionseinheit (1) nach Patentanspruch 5, wobei die Grundplatte (3) zumindest ein Flüssigkeitsventil (11) zur Steuerung der zumindest einen Flüssigkeitsdüse (9, 10) aufweist.

7. Funktionseinheit (1) nach Patentanspruch 6, wobei die Grundplatte (3) einen Hebel (12) zur Steuerung des Flüssigkeitsventils (11) aufweist.

8. Funktionseinheit (1) nach einem der vorhergehenden Patentansprüche, wobei die Grundplatte (3) ein Betätigungselement (13) zum Verstellen einer Position der Funktionseinheit (1) an der Bidetkeramik (4) aufweist.

9. Funktionseinheit (1) nach einem der vorhergehenden Patentansprüche, wobei die Grundplatte (3) zumindest eine Verstärkungsstruktur (14) aufweist.

## Claims

1. A functional unit (1) for a shower WC seat (2), comprising at least:
- a base plate (3) made of plastics for fastening to a WC ceramic (4);
- a cover (5) for at least partially covering the base plate (3) on the WC ceramic (4); and
- at least one fastening element (6, 7) for the shower WC seat (2), wherein the at least one fastening element (6, 7) is at least partially cast into the base plate (3).

2. The functional unit (1) according to claim 1, wherein the fastening element (6, 7) is at least partially made of metal.

3. The functional unit (1) according to any one of the preceding claims, wherein the at least one fastening element (6, 7) extends through the cover (5).

4. The functional unit (1) according to any one of the preceding claims, wherein the base plate (3) has at least one functional component (8) of the functional unit (1).

5. The functional unit (1) according to any one of the preceding claims, wherein the base plate (3) has at least one liquid nozzle (9, 10).

6. The functional unit (1) according to claim 5, wherein the base plate (3) has at least one liquid valve (11) for controlling the at least one liquid nozzle (9, 10).

7. The functional unit (1) according to claim 6, wherein the base plate (3) has a lever (12) for controlling the liquid valve (11).

8. The functional unit (1) according to any one of the preceding claims, wherein the base plate (3) has an actuating element (13) for adjusting a position of the functional unit (1) on the bidet ceramic (4).

9. The functional unit (1) according to any one of the preceding claims, wherein the base plate (3) has at least one reinforcing structure (14).

## Revendications

1. Unité fonctionnelle (1) destinée à un abattant à douche pour cuvette de WC (2), comportant au moins :
- une plaque support (3) en matière plastique, qui doit être fixée sur une céramique de WC (4) ;
- un couvercle (5), destiné à recouvrir au moins partiellement la plaque support (3) sur la céramique de WC (4) ; et
- au moins un élément de fixation (6, 7) de l'abattant à douche pour cuvette de WC (2), l'au moins un élément de fixation (6, 7) étant coulé au moins partiellement dans la plaque support (3) .

2. Unité fonctionnelle (1) selon la revendication 1, l'élément de fixation (6, 7) étant constitué au moins partiellement en métal.

3. Unité fonctionnelle (1) selon l'une quelconque des revendications précédentes, l'au moins un élément de fixation (6, 7) s'étendant à travers le couvercle (5) .

4. Unité fonctionnelle (1) selon l'une quelconque des revendications précédentes, la plaque support (3) comportant au moins un composant fonctionnel (8) de l'unité fonctionnelle (1).

5. Unité fonctionnelle (1) selon l'une quelconque des revendications précédentes, la plaque support (3) comportant au moins une buse à liquide (9, 10).

6. Unité fonctionnelle (1) selon la revendication 5, la plaque support (3) comportant au moins une soupape à liquide (11), destinée à commander l'au moins une buse à liquide (9, 10).

7. Unité fonctionnelle (1) selon la revendication 6, la plaque support (3) comportant un levier (12), destiné à commander la soupape à liquide (11).

8. Unité fonctionnelle (1) selon l'une quelconque des revendications précédentes, la plaque support (3) comportant un élément de manœuvre (13), destiné à ajuster une position de l'unité fonctionnelle (1) sur la céramique de WC (4).

9. Unité fonctionnelle (1) selon l'une quelconque des revendications précédentes, la plaque support (3) comportant au moins une structure de renfort (14).
